# EUROPÄISCHE PATENTSCHRIFT

(11) **EP 1 958 101 B1**
(45) Veröffentlichungstag und Bekanntmachung des Hinweises auf die Patenterteilung: **03.11.2010**
(21) Anmeldenummer: 06829126.9
(22) Anmeldetag: 25.11.2006
(51) Int. Cl.: G06F 17/50, G06F 11/00, G06Q 50/00, G05B 17/00

(54) **SYSTEM UND VERFAHREN ZUR AUTOMATISCHEN PRÜFUNG VON PLANUNGSERGEBNISSEN**
SYSTEM AND METHOD FOR THE AUTOMATIC VERIFICATION OF PLANNING RESULTS
SYSTEME ET PROCEDE DE VERIFICATION AUTOMATIQUE DE RESULTATS DE CONCEPTION

(30) Priorität: 09.12.2005 DE 102005058802
(43) Veröffentlichungstag der Anmeldung: 20.08.2008
(73) Patentinhaber: ABB Technology AG, 8050 Zürich (CH)
(72) Erfinder: FAY, Alexander, 22149 Hamburg (DE); DRATH, Rainer, 69469 Weinheim (DE)
(74) Vertreter: Partner, Lothar
(86) Internationale Anmeldenummer: PCT/EP2006/011319
(87) Internationale Veröffentlichungsnummer: WO 2007/065571

(56) Entgegenhaltungen:
- EP-A- 1 657 670
- DE-A1- 10 133 670
- DE-A1-102004 006 089

## Beschreibung

Die Erfindung bezieht sich auf ein System und ein Verfahren zur automatischen Prüfung von Planungsergebnissen im Bereich der Anlagentechnik und/oder Prozessleittechnik. Ein solches System bzw. Verfahren kann zur automatischen Validation und Verifikation unterschiedlicher, bei der Planung technischer Anlagen erstellter Informationen, die in elektronischer Form vorliegen, insbesondere Topologie-Informationen, eingesetzt werden.

Aus DE 10 2004 006 089 A1 ist eine Testvorrichtung zum automatischen Testen eines technischen Systems, insbesondere eines Teilsystems eines Kraftfahrzeugs, beispielsweise eines elektronischen Steuergeräts. Zum Testen werden Testfälle herangezogen. Die Testfälle umfassen jeweils eine Anweisung, eine Variable des technischen Systems zu verändern, d. h. ihr einen anderen Wert zuzuordnen. Mittels der Testvorrichtung wird geprüft, ob das an die Testvorrichtung angeschlossene System oder Gerät in der erwarteten Weise auf die Änderung der jeweiligen Variablen reagiert. Die Testvorrichtung ist zur Prüfung von technischen Systemen geeignet, die durch Variablen gekennzeichnet sind.

Aus EP-A-1 657 670 ist ein System zur automatischen und systematischen Analyse und Kontrolle von Vorgängen oder Abläufen eines technischen Prozesses bekannt. Das zur Status- und Fortschrittskontrolle des technischen Prozesses dienende System arbeitet mit Prüfroutinen zur Beschreibung und Ausführung von Prüfkriterien für die Auswertung von Daten, die den aktuellen Zustand des Prozesses kennzeichnen. Das System ist u. a. auch zur Status- und Fortschrittskontrolle in datengetriebenen Planungsprozessen geeignet, wie beispielsweise Anlagen- und Leittechnikplanung. Die zur Analyse und Kontrolle herangezogenen Kriterien sind geeignet zur Prüfung auf Existenz von Daten, Datenobjekten und/oder Attributen der Datenobjekte. Das System und die verwendeten Kriterien sind allerdings nicht vorgesehen und auch nicht geeignet zur Prüfung von Planungsergebnissen hinsichtlich Planungsfehlern.

Die Planung von Anlagen erfolgt schrittweise und ist insbesondere durch Phasen des Datenaustausches mit benachbarten Planungsphasen gekennzeichnet. Die Datenübernahme erfolgt dabei häufig manuell, d. h. ausgedruckte oder handschriftliche Vorlagen werden manuell in Softwarewerkzeuge übertragen. Darüber hinaus existieren auch automatische Datenübernahmemechanismen, die häufig auf Excel, Datenbanken oder ASCII-Dateien wie CSV oder XML basieren. Eine solche elektronische Datenübertragung erfolgt aber im wesentlichen mechanistisch, ohne oder nur mit sehr einfacher automatischer inhaltlicher Überprüfung der Informationen.

Die Erfindung basiert auf der bekannten Verwendung elektronischer und semantisch automatisch interpretierbarer Anlageninformationen. Derartige Ansätze sind seit einiger Zeit bekannt und werden bereits praktisch eingesetzt und sind unter anderem in:
■ Till Schmidberger und Alexander Fay, Rainer Drath, "Automatisiertes Engineering von Prozessleitsystem-Funktionen", in atp - Automatisierungstechnische Praxis , 2/2005, pp. 45-51. ISSN 0178-2320 ,
■ Rainer Drath, Murat Fedai, "CAEX - ein neutrales Datenaustauschformat für Anlagendaten - Teil 1", in atp - Automatisierungstechnische Praxis , 2/2004, pp. 52-56,
■ Rainer Drath, Murat Fedai, "CAEX - ein neutrales Datenaustauschformat für Anlagendaten - Teil 2", in atp - Automatisierungstechnische Praxis , 3/2004, pp. 20-27,
■ DE 103 08 725 A1: " System und Verfahren zum Verwalten und zum Austausch von Daten eines technischen Projektes, einer technischen Anlage sowie einzelner Anlagenkomponenten", und Schmidberger T., Fay A., Drath R.: "Automatische Erstellung von Verriegelungssteuerungen". in: atp 2/2005, Oldenbourg Verlag, 2005, S. 45-51 beschrieben

Planungsinformationen lassen sich hierarchisch und objektorientiert abbilden, beispielsweise in Baumstrukturen. Folgende Planungsinformationen treten dabei typischerweise auf:
- Anlagentopologieinformationen, also die verfahrenstechnische Struktur,
- Leittechniktopologieinformationen, die sich auf die leittechnische Hardwarestruktur inklusive Verkabelung beziehen,
- Leittechnikfunktionstopologien, d. h. die leittechnische Softwarestruktur,
- Projekttopologie, insbesondere Projekte, Unterprojekte, Teilaufgaben,
- Planungstopologie, d. h. die gespeicherte vorweggenommene Struktur der Planung,
- Produktstrukturinformationen, die sich auf die modulare, hierarchische und/oder inhaltliche Komposition des Produkts bzw. der Produkte beziehen, die auf der Anlage gefertigt werden, und
- Produktionsprozesstopologie, also Produktionsprozessinformationen, also die Ablaufstruktur des Produktionsprozesses ,beispielsweise in Form von "Rezepten" oder Aktionssequenzen.

Solche manuell erstellten, manuell importierten oder teilautomatisch importierten Informationen werden manuell oder bestenfalls partiell automatisch auf ihre Korrektheit überprüft. Die Prüfung durch Menschen erlaubt aufgrund auftretender zufälliger Fehler dabei keine sichere Aussage über die Korrektheit der Informationen. Die partiell automatische Prüfung erfasst nur niedere und einfache Zusammenhänge und eignet sich nicht für die Prüfung übergreifender Zusammenhänge.

Die Korrektheit bzw. Richtigkeit von Informationen soll sich aber beziehen auf
- eine vollständige und sinnvolle Anlagentopologie,
- eine vollständige und sinnvolle Leittechniktopologie,
- eine vollständige und sinnvolle Leittechnikfunktionstopologie,
- eine vollständige und sinnvolle Projekttopologie,
- eine vollständige und sinnvolle Planungstopologie,
- vollständige und sinnvolle Produktstrukturinformationen,
- vollständige und sinnvolle Produktionsprozessinformationen, und
- vollständige und sinnvolle Relationen zwischen den Topologien, Komponenten und Strukturen.

Eine Prüfung von Topologieinformationen erfolgt üblicherweise an den folgernden drei Stellen des Planungsprozesses:
1. beim Übertragen der Informationen von benachbarten Planungsphasen, wobei geprüft wird, ob die Informationen korrekt angekommen sind,
2. anhand Planungsinformationen der eigenen Bearbeitungsphase, und
3. anhand der Realisierung, beispielsweise mittels Tests bei der Inbetriebnahme. Fehler bei der Datenübertragung und Fehler bei der Planung führen zumeist zu einem Fehler bei der Inbetriebnahme. Deshalb ist die Prüfung der Planungsinformationen besonders wichtig und nimmt erhebliche Zeit in Anspruch und kann bei nicht erkannten Fehlern zu schweren Folgen beim Betrieb der Anlage führen.

Davon ausgehend liegt der Erfindung die Aufgabe zugrunde, durch eine Automatisierung der Prüfung von Planungsergebnissen im Bereich der Anlagentechnik und/oder Prozessleittechnik, insbesondere von Topologieinformationen, Fehler zu vermeiden, bzw. Inbetriebnahmen schneller, qualitativ hochwertiger und effizienter durchführen zu können.

Diese Aufgabe wird durch ein System zur automatischen Prüfung von Planungsergebnissen im Bereich der Anlagentechnik und/oder Prozessleittechnik gelöst, das die im Anspruch 1 angegebenen Merkmale aufweist. Ein entsprechendes Verfahren und vorteilhafte Ausgestaltungen sind in weiteren Ansprüchen angegeben.

Mit der Erfindung wird also ein System bzw. Verfahren zur automatischen Prüfung von Planungsergebnissen vorgeschlagen, wobei Prüfungen mittels einer Datenverarbeitungseinrichtung, in der zu prüfende Planungsergebnisse in elektronischer Form gespeichert sind, und die Software-Mittel zur Durchführung automatischer und systematischer Prüfungen aufweist. Die Mittel enthalten in Form von Regeln gespeicherte Prüfkriterien, sowie Prüfprogramme, die Zugriff auf die Planungsergebnisse und die Regeln haben. Außerdem sind Anzeige- und/oder Ausgabemittel zur Ausgabe von Prüfungsergebnissen vorhanden.

Zur Durchführung der Erfindung sind also Planungstopologien in elektronischer Form erforderlich, beispielsweise erreicht durch die Verwendung eines objekt-orientierten Topologie-Datenmodells oder durch den Export derartiger Informationen in ein solches Datenformat. Diese Daten liegen beispielsweise in dem in den Referenzen oben beschriebenen CAEX-Format vor. Eine weitere Voraussetzung zur Durchführung der Erfindung ist eine semantische Interpretierberkeit der Informationen, d. h. die Objekte müssen in der Lage sein, der Verarbeitungseinrichtung mitzuteilen, welcher Art sie sind und welche Rolle sie in ihrem Umfeld spielen.

Das erfindungsgemäße Verfahren arbeitet mit Prüfkriterien in Form von Regeln, die herangezogen werden, um elektronisch vorliegende Topologieinformationen automatisch und systematisch zu analysieren. Solche Regeln sind generische Beschreibungen von erforderlichen kausalen Verknüpfungen und Beziehungen. Ist der Bedingungsteil der Regel auf ein Element oder mehrere Elemente einer oder mehrerer der Topologien oder weiterer Regeln anwendbar, so ergibt sich aus dem Konsequenz-Teil der Regel, welcher andere Sachverhalt oder Zusammenhang, gleiche oder andere Elemente derselben oder anderer Topologie(n) bzw. Regeln betreffend, gegeben sein muss. Die automatische Überprüfung ist im Gegensatz zur manuellen Prüfung deterministisch und unterliegt keinen zufälligen Fehlern, wodurch der Prüfvorgang nachvollziehbar, protokollierbar und somit nachweisbar wird. Die Nachweisbarkeit der Korrektheit einer Information bezüglich definierter Kriterien ist einer der wesentlichen Vorteile dieser Vorgehensweise.

Das erfindungsgemäße Verfahren ist in unterschiedlichen Phasen eines Planungsprozesses und im Rahmen der Inbetriebnahme einsetzbar, wie beispielsweise beim Übergang von der Anlagenplanung zur Leittechnikplanung, beim Übergang zur anschließenden Inbetriebnahme, sowie während der Inbetriebnahme.

Beispiele für solche Anwendungen sind:

### Eine Prüfung der Vollständigkeit von Anlagentopologien:

Dabei ist zu prüfen, ob die zu importierenden und/oder geplanten Anlagenkomponenten sinnvoll miteinander in Verbindung stehen, beispielsweise dass jeder Tank mit Zuflüssen auch mindestens einen Abfluss hat, dass jeder Tank mit Abflüssen mindestens einen Zufluss hat, dass Pumpen nicht gegeneinander arbeiten können oder dass Rohre keine freien Enden besitzen.

### Prüfung der Vollständigkeit von Leittechniktopologie:

Dabei ist zu prüfen, ob die zu importierenden und/oder geplanten Leittechnikkomponenten sinnvoll miteinander in Verbindung stehen, beispielsweise dass jeder Sensor/Aktor mit einem Bussystem oder einem sonstigen Informations-übertragungssystem verbunden ist, dass Komponenten der Leittechniktopologie elektrisch versorgt sind, dass Wirklinien sinnvoll miteinander in Relation stehen, dass keine Wirklinien fehlen oder dass Informationskopplungen kompatible Datentypen verbinden.

### Prüfung der Vollständigkeit von Leittechnikfunktionstopologie:

Dabei ist zu prüfen, ob die zu importierenden und/oder geplanten Leittechnik-Funktionsbausteine sinnvoll miteinander in Verbindung stehen, dass Signale korrekt miteinander verbunden sind oder dass die Zahl der Leittechnikfunktionen vom zugeordneten Prozessor verarbeitet werden können.

### Prüfung der Konsistenz der Topologien untereinander:

Dabei ist zu prüfen, ob die Komponenten der verschiedenen Topologien sinnvoll zueinander in Beziehung stehen, beispielsweise dass jede Pumpe oder jedes Förderband in der Anlagentopologie einen Antrieb in der Leittechnik-Topologie besitzt, dass jeder Produktstrom in der Produktionsprozessinformation durch ein Förderelement in der Anlagentopologie unterstützt bzw. erzwungen wird, womit sich überprüfen lässt, ob ein bestimmter Produktionsablauf auf einer Anlage durchgeführt werden kann, oder dass jeder mögliche Produktstrom einen gültigen Anfang und ein gültiges Ende besitzt.

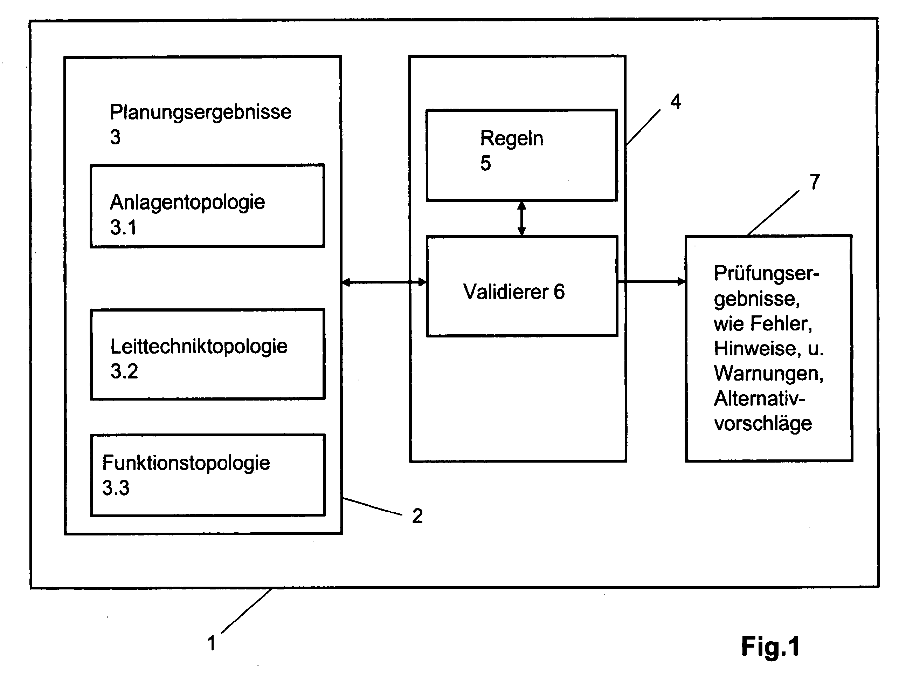

Anhand des in der folgenden **Fig. 1** dargestellten Ausführungsbeispieles sollen die Erfindung sowie vorteilhafte Ausgestaltungen, Verbesserungen und weitere Vorteile der Erfindung näher erläutert und beschrieben werden.

**Fig. 1** zeigt ein System zur automatischen Prüfung von Planungsergebnissen, wobei eine Datenverarbeitungseinrichtung 1 vorhanden ist, die Speichereinrichtungen 2, Mittel 4 zur Durchführung von Prüfungen, sowie Anzeige- und/oder Ausgabemittel 7 für die Ausgabe von Prüfungsergebnissen aufweist. In den Speichereinrichtungen 2 sind Planungsergebnisse 3, beispielsweise eine Anlagentopologie 3.1, eine Leittechniktopologie 3.2 und eine Funktionstopologie 3.3 gespeichert. Die Prüfungsmittel 4 enthalten einen Validierer 6, der Zugriff auf die Planungsergebnisse 3, 3.1, 3.2, 3.3 und auf Regeln 5 hat Der Validierer 6 ist eine Verarbeitungseinrichtung in der Prüfprogramme laufen. Die Prüfprogramme sind zur Durchführung von Prüfungen eingerichtet, die oben beispielhaft als Anwendungen, bzw. Vollständigkeitsprüfungen beschrieben sind. Die Regeln 5, die als Prüfkriterien zur Durchführung von Prüfungen herangezogen werden, sind ebenfalls oben bereits beschrieben. Mittels der Anzeige- und/oder Ausgabemittel 7 ausgebbare Prüfungsergebnisse sind beispielsweise Fehler, Hinweise, Warnungen oder Alternativvorschläge.

Die Funktion eines Prüfprogramms wird nachstehend anhand eines typischen Prüfungsablaufs näher erläutert. Ein Prüfprogramm wendet eine der gespeicherten Regeln auf die vorliegenden Daten an. Dazu steilt das Prüfprogramm zunächst fest, ob der in der Regel-Prämisse beschriebene topologische Zusammenhang zwischen dem zu prüfenden Objekt und anderen Objekten und Attributen in den Anlagen-Daten vorkommt. Ein einfaches Beispiel wäre: "WENN das dem zu prüfenden Objekt übergeordnete Objekt das Attribut x hat...". Dabei kann der in der Prämisse beschriebene Zusammenhang auch mehrere Objekte und mehrere Attribute und verschiedene Topologien umfassen. Findet das Prüfprogramm an einer Stelle oder an mehreren Stellen in den Anlagen-Daten einen derartigen Zusammenhang, so überprüft es an jeder dieser Stellen, ob auch der in der Regel-Konklusion beschriebene Sachverhalt erfüllt ist. Bei letzterem kann es sich beispielsweise um eine einfache Bedingung für ein Attribut handeln, aber auch um komplexere Bedingungen, die sich auf die Existenz und Ausprägung von Objekten, Attributen und/oder topologische und andere Beziehungen zwischen Objekten und/oder Attributen beziehen. Wenn das Prüfprogramm diese Regel auf alle vorhandenen Anwendungsmöglichkeiten angewandt hat, führt es diesen Vorgang nacheinander für die anderen gespeicherten Regeln aus.

Ein Prüfverfahren, das mit einem solchen Prüfungssystem durchführbar ist, lässt sich ebenfalls anhand der Fig. 1 erläutern: Nachdem im System Planungsergebnisse in geeigneter elektronischer Form, Regeln und Prüfprogramme gespeichert sind, kann die Durchführung ausgewählter Prüfungen automatisiert erfolgen. Das jeweilige Prüfprogramm greift auf die Planungsergebnisse zu, führt Prüfungen gemäß zugehöriger Regeln durch und gibt Prüfungsergebnisse zur Anzeige, Protokollierung oder zur sonstigen Verarbeitung aus.

## Patentansprüche

1. System mit einer Datenverarbeitungseinrichtung (1), die
- Speichereinrichtungen (2) für Planungsergebnisse (3, 3.1, 3.2, 3.3) für den Bereich der Anlagentechnik und/oder Prozessleittechnik enthält,
- eine Verarbeitungseinrichtung (6) und
- Mittel (4) zur Durchführung automatischer Prüfungen,
- sowie Anzeige- und/oder Ausgabemittel (7) zur Ausgabe von Prüfungsergebnissen enthält, wobei
a) das Mittel (4) zur Durchführung automatischer und systematischer Prüfungen der Planungsergebnisse (3, 3.1, 3.2, 3.3) eingerichtet ist,
b) das Mittel (4) die Verarbeitungseinrichtung (6) und Prüfkriterien in Form von Regeln (5) enthält, wobei die Verarbeitungseinrichtung (6) ein Validierer (6) mit wenigstens einem Prüfprogramm ist,
c) die Planungsergebnisse (3, 3.1, 3.2, 3.3) als semantisch interpretierbare Topologie-Informationen in elektronischer Form in den Speichereinrichtungen (2) gespeichert sind,
**dadurch gekennzeichnet, dass**
d) das Prüfprogramm auf die Planungsergebnisse (3, 3.1, 3.2, 3.3) und die Regeln (5) zugreift und dabei die Prüfergebnisse anhand von den topologischen Zusammenhängen der Planungsergebnisse (3, 3.1, 3.2, 3.3) erzeugt.

2. System nach Anspruch 1, **dadurch gekennzeichnet, dass** die zu prüfenden Planungsergebnisse (3, 3.1, 3.2, 3.3) wenigstens jeweils eine Anlagentopologie (3.1), und/oder Leittechniktopologie (3.2) und/oder Funktionstopologie (3.3) und/oder Planungstopologie und/oder Projekttopologie und/oder Prozesstopologie enthalten.

3. System nach Anspruch 1 oder 2, **dadurch gekennzeichnet, dass** die Datenverarbeitungseinrichtung (1) dafür eingerichtet ist, Fehler, Hinweise und Warnungen, sowie Alternativvorschläge als Prüfungsergebnisse auszugeben.

4. System nach einem der vorstehenden Ansprüche, **dadurch gekennzeichnet, dass** die Daten der Planungsergebnisse in einem hierarchischen objektorientierten Datenformat vorliegen.

5. System nach einem der vorstehenden Ansprüche, **dadurch gekennzeichnet, dass** es für die automatische Prüfung von Planungsergebnissen im Bereich der Anlagentechnik und/oder Prozessleittechnik eingerichtet ist.

6. System nach einem der vorstehenden Ansprüche, **dadurch gekennzeichnet, dass** Regeln (5) verwendet werden, die generische Beschreibungen von erforderlichen kausalen Verknüpfungen sind.

7. Verfahren zur Durchführung automatischer Prüfungen mittels einer Datenverarbeitungseinrichtung (1), wobei
a) vorliegende Planungsergebnisse (3, 3.1, 3.2, 3.3) für den Bereich der Anlagentechnik und/oder Prozessleittechnik gespeichert werden,
b) die Planungsergebnisse (3, 3.1, 3.2, 3.3) als semantisch interpretierbare Topologie-Informationen in elektronischer Form in den Speichereinrichtungen (2) gespeichert sind, und
c) die Planungsergebnisse (3, 3.1, 3.2, 3.3) mittels einem Validierer (6) und wenigstens einem Prüfprogramm unter Zugriff auf in Form von Regeln (5) gespeicherten Prüfkriterien systematisch analysiert werden,
**dadurch gekennzeichnet, dass**
d) dass Prüfprogramm Prüfungsergebnisse anhand von topologischen Zusammenhängen der Planungsergebnisse erzeugt.

8. Verfahren nach Anspruch 7, **dadurch gekennzeichnet, dass** Regeln (5) verwendet werden, die generische Beschreibungen von erforderlichen kausalen Verknüpfungen sind.

9. Verfahren nach Anspruch 7 oder 8, **dadurch gekennzeichnet, dass** als zu prüfende Planungsergebnisse (3, 3.1, 3.2, 3.3) Daten wenigstens jeweils einer Anlagentopologie (3.1), und/oder Leittechniktopologie (3.2) und/oder Funktionstopologie (3.3) und/oder Planungstopologie und/oder Projekttopologie und/oder Prozesstopologie verwendet werden.

10. Verfahren nach einem der Ansprüche 7 bis 9, **dadurch gekennzeichnet, dass** zur Durchführung des Prüfverfahrens Daten der Planungsergebnisse (3, 3.1, 3.2, 3.3) herangezogen werden, die in einem hierarchischen objektorientierten Datenformat vorliegen.

## Claims

1. System having a data processing device (1) which contains
- memory devices (2) for planning results (3, 3.1, 3.2, 3.3) for the field of installation technology and/or process control technology,
- a processing device (6) and
- means (4) for carrying out automatic tests,
- as well as display and/or output means (7) for
outputting test results,
wherein
a) the means (4) are designed to carry out automatic and systematic tests of the planning results (3, 3.1, 3.2, 3.3),
b) the means (4) contain the processing device (6) and test criteria in the form of rules (5), wherein the processing device (6) is a validator (6) with at least one test program,
c) the planning results (3, 3.1, 3.2, 3.3) are stored as semantically interpretable topology information in electronic form in the memory devices (2),
**characterized in that**
d) the test program accesses the planning results (3, 3.1, 3.2, 3.3) and the rules (5) and in the process produces the test results on the basis of the topological relationships between the planning results (3, 3.1, 3.2, 3.3).

2. System according to Claim 1, **characterized in that** the planning results (3, 3.1, 3.2, 3.3) to be tested each contain at least one installation topology (3.1) and/or control technology topology (3.2) and/or functional topology (3.3) and/or planning topology and/or project topology and/or process topology.

3. System according to Claim 1 or 2, **characterized in that** the data processing device (1) is arranged to output faults, errors, information, warnings and alternative proposals as test results.

4. System according to one of the preceding claims, **characterized in that** the data in the planning results is in a hierarchical, object-oriented data format.

5. System according to one of the preceding claims, **characterized in that** it is arranged for the automatic testing of planning results in the field of installation technology and/or process control technology.

6. System according to one of the preceding claims, **characterized in that** rules (5) are used which are generic descriptions of required causal links.

7. Method for carrying out automatic tests by means of a data processing device (1), wherein
a) existing planning results (3, 3.1, 3.2, 3.3) for the field of installation technology and/or process control technology are stored,
b) the planning results (3, 3.1, 3.2, 3.3) are stored as semantically interpretable topology information in electronic form in the memory devices (2), and
c) the planning results (3, 3.1, 3.2, 3.3) are systematically analysed by means of a validator (6) and at least one test program, accessing test criteria which are stored in the form of rules (5),
**characterized in that**
d) the test program produces test results on the basis of topological relationships between the planning results.

8. Method according to Claim 7, **characterized in that** rules (5) are used which are generic descriptions of required causal links.

9. Method according to Claim 7 or 8, **characterized in that** data of in each case at least one installation topology (3.1), and/or control technology topology (3.2) and/or functional topology (3.3) and/or planning topology and/or project topology and/or process topology is used as planning results (3, 3.1, 3.2, 3.3) to be tested.

10. Method according to one of Claims 7 to 9, **characterized in that** for carrying out the test method data in the planning results (3, 3.1, 3.2, 3.3) are used, which are in a hierarchical, object-oriented data format.

## Revendications

1. Système comportant un dispositif de traitement de données (1), comprenant :
- des dispositifs de mémorisation (2) de résultats de planification (3, 3.1, 3.2, 3.3) pour le domaine de la technique des installations industrielles et/ou de la technique de la commande de processus,
- un dispositif de traitement (6), et
- un moyen (4) destiné à effectuer des vérifications automatiques,
- ainsi que des moyens d'affichage et/ou de sortie (7) pour la sortie de résultats de vérification, dans lequel
a) le moyen (4) est conçu pour effectuer des vérifications automatiques et systématiques des résultats de planification (3, 3.1, 3.2, 3.3),
b) le moyen (4) comprend le dispositif de traitement (6) et des critères de vérification sous forme de règles (5), le dispositif de traitement (6) étant un validateur (6) comprenant au moins un programme de vérification,
c) les résultats de planification (3, 3.1, 3.2, 3.3) sont mémorisés en tant qu'informations topologiques interprétables sémantiquement sous forme électronique dans les dispositifs de mémorisation (2),
**caractérisé en ce que**
d) le programme de vérification accède aux résultats de planification (3, 3.1, 3.2, 3.3) et aux règles (5) et produit ainsi les résultats de vérification sur la base de relations topologiques entre les résultats de planification (3, 3.1, 3.2, 3.3).

2. Système selon la revendication 1, **caractérisé en ce que** les résultats de planification (3, 3.1, 3.2, 3.3) à vérifier comprennent chacun une topologie d'installation industrielle (3.1), et/ou une topologie de technique de commande (3.2), et/ou une topologie de fonction (3.3) et/ou une topologie de planification et/ou une topologie de projet et/ou une topologie de processus.

3. Système selon la revendication 1 ou 2, **caractérisé en ce que** le dispositif de traitement de données (1) est conçu pour délivrer en tant que résultats de vérification des erreurs, des indications et des avertissements, ainsi que des propositions alternatives.

4. Système selon l'une des revendications précédentes, **caractérisé en ce que** les données des résultats de planification sont présentées dans un format de données orienté objet hiérarchisé.

5. Système selon l'une des revendications précédentes, **caractérisé en ce qu'**il est conçu pour la vérification automatique de résultats de planification dans le domaine de la technique des installations industrielles et/ou de la technique de commande de processus.

6. Système selon l'une des revendications précédentes, **caractérisé en ce que** des règles (5) qui sont des descriptions génériques de combinaisons causales nécessaires sont utilisées.

7. Procédé destiné à effectuer des vérifications automatiques au moyen d'un dispositif de traitement de données (1), dans lequel :
a) des résultats de planification existants (3, 3.1, 3.2, 3.3) relevant du domaine de la technique des installations industrielles et/ou de la technique de la commande de processus sont mémorisés,
b) les résultats de planification (3, 3.1, 3.2, 3.3) sont mémorisés en tant qu'informations topologiques interprétables sémantiquement sous forme électronique dans les dispositifs de mémorisation (2), et
c) les résultats de planification (3, 3.1, 3.2, 3.3) sont analysés sémantiquement au moyen d'un validateur (6) et d'au moins un programme de vérification en accédant à des critères de vérification mémorisés sous forme de règles (5),
**caractérisé en ce que**
d) le programme de vérification produit des résultats de vérification sur la base de relations topologiques entre les résultats de planification.

8. Procédé selon la revendication 7, **caractérisé en ce que** des règles (5) qui sont des descriptions génériques de combinaisons causales nécessaire sont utilisées.

9. Procédé selon la revendication 7 ou 8, **caractérisé en ce que** les résultats de planification (3, 3.1, 3.2, 3.3) à vérifier comprennent chacun une topologie d'installation industrielle (3.1), et/ou une topologie de technique de commande (3.2), et/ou une topologie de fonction (3.3) et/ou une topologie de planification et/ou une topologie de projet et/ou une topologie de processus.

10. Procédé selon l'une des revendications 7 à 9, **caractérisé en ce que,** pour la mise en oeuvre du procédé de vérification, des données de résultats de planification (3, 3.1, 3.2, 3.3) qui sont présentées selon un format de données orienté objet hiérarchisé sont utilisées.
